# EUROPÄISCHE PATENTSCHRIFT

(11) **EP 2 791 487 B1**
(45) Veröffentlichungstag und Bekanntmachung des Hinweises auf die Patenterteilung: **09.03.2016**
(21) Anmeldenummer: 12806347.6
(22) Anmeldetag: 08.12.2012
(51) Int. Cl.: F02B 37/18, F01D 17/10

(54) **BETÄTIGUNGSEINRICHTUNG FÜR EINE TURBINE EINES ABGASTURBOLADERS**
ACTUATING DEVICE FOR A TURBINE OF AN EXHAUST GAS TURBOCHARGER
DISPOSITIF DE COMMANDE D'UNE TURBINE DE TURBOCOMPRESSEUR À GAZ D'ÉCHAPPEMENT

(30) Priorität: 17.12.2011 DE 102011121391
(43) Veröffentlichungstag der Anmeldung: 22.10.2014
(73) Patentinhaber: IHI Charging Systems International GmbH, 69126 Heidelberg (DE)
(72) Erfinder: LOWAK, Tim, 58540 Meinerzhagen (DE); FAUCONNIER, Vincent, 69181 Leimen (DE)
(74) Vertreter: Heeb-Keller, Marion Annette
(86) Internationale Anmeldenummer: PCT/EP2012/005084
(87) Internationale Veröffentlichungsnummer: WO 2013/087182

(56) Entgegenhaltungen:
- GB-A- 2 151 700
- US-A1- 2003 196 435

## Beschreibung

Die Erfindung betrifft eine Betätigungseinrichtung für eine Turbine eines Abgasturboladers der im Oberbegriff des Patentanspruchs 1 angegebenen Art.

Eine solche Betätigungseinrichtung ist der US 2003/0196435 A1 als bekannt zu entnehmen. Die Betätigungseinrichtung dient zum Einstellen des Ladedrucks des Abgasturboladers und umfasst ein um eine Drehachse drehbares, erstes Bolzenelement. Über das erste Bolzenelement ist ein Ventilelement, ein sogenanntes Waste-Gate, der Turbine zwischen einer Schließstellung und wenigstens einer Offenstellung bewegbar.

In der Offenstellung gibt das Ventilelement einen Umgehungskanal, einen sogenannten Waste-Gate-Kanal, frei. Über den Umgehungskanal kann ein Turbinenrad der Turbine von Abgas umgangen werden, so dass das Turbinenrad nicht von dem Abgas angetrieben wird. Durch Öffnen und Schließen des Umgehungskanals kann die Leistung der Turbine und somit der Ladedruck des Abgasturboladers eingestellt werden.

Das erste Bolzenelement ist drehfest mit einem Verbindungselement, vorliegend einer Verbindungsplatte, verbunden. Das Verbindungselement ist über ein zweites Bolzenelement gelenkig mit einem Betätigungselement verbunden. Dabei sind das Betätigungselement und das Verbindungselement um eine weitere Drehachse relativ zueinander drehbar verbunden, wobei die Drehachse und die weitere Drehachse zumindest im Wesentlichen parallel zueinander verlaufen. Das Betätigungselement ist zumindest im Wesentlichen senkrecht zur Drehachse des ersten Bolzenelements translatorisch bewegbar.

Wird das Betätigungselement translatorisch bewegt, so wird dadurch infolge der Verbindung des Betätigungselements mit dem Verbindungselement sowie infolge der Verbindung des Verbindungselements mit dem ersten Bolzenelement das erste Bolzenelement um seine Drehachse gedreht. Damit einher geht die Bewegung des Ventilelements der Turbine.

Es hat sich gezeigt, dass es insbesondere infolge von Verschleiß sowie infolge von fertigungsbedingten Toleranzen zu einem Spiel zwischen dem Verbindungselement und den Bolzenelementen kommen kann. Daraus resultieren Geräusche.

Es ist daher Aufgabe der vorliegenden Erfindung, eine Betätigungseinrichtung für eine Turbine eines Abgasturboladers der eingangs genannten Art derart weiterzuentwickeln, dass die Turbine ein verbessertes Geräuschverhalten aufweist.

Diese Aufgabe wird durch eine Betätigungseinrichtung mit den Merkmalen des Patentanspruchs 1 gelöst. Vorteilhafte Ausgestaltungen mit zweckmäßigen und nichttrivialen Weiterbildungen der Erfindung sind in den übrigen Ansprüchen angegeben.

Die eingangs geschilderte Geräuschentwicklung lässt sich erfindungsgemäß dadurch besonders gering halten oder vermeiden, dass beide Bolzenelemente auf wenigstens einer ersten Seite des Verbindungselements über ein einstückiges Vermittlungselement an dem Verbindungselement abgestützt sind. Das den Bolzenelementen gemeinsame Vermittlungselement ermöglicht die Kompensation von insbesondere fertigungsbedingten sowie verschleißbedingten Toleranzen und Spielen zwischen den Bolzenelementen und dem Verbindungselement. So kann insbesondere ein Klappern der erfindungsgemäßen Betätigungseinrichtung auch über eine hohe Lebensdauer hinweg sicher vermieden werden.

Das einstückige und den Bolzenelementen gemeinsame Vermittlungselement ist darüber hinaus einfach und damit zeit- und kostengünstig montierbar und zwischen den Bolzenelementen und dem Verbindungselement anordenbar, insbesondere im Vergleich zu jeweiligen, einzelnen Vermittlungselementen zwischen den Bolzenelementen und dem Verbindungselement.

Erfindungsgemäss ist wenigstens eines der Bolzenelemente, insbesondere das zweite Bolzenelement, auch auf einer der ersten Seite abgewandten zweiten Seite des Verbindungselements über das einstückige Vermittlungselement am Verbindungselement abgestützt. Dadurch ist eine feste und definierte Abstützung realisiert, so dass Relativbewegungen zwischen den Bolzenelementen und dem Verbindungselement und daraus resultierende Geräusche auch über eine hohe Lebensdauer hinweg sicher vermieden werden können.

Ist das einstückige Vermittlungselement an einem der Bolzenelemente, insbesondere am zweiten Bolzenelement, befestigt, so hält dies die Teileanzahl und damit die Kosten der erfindungsgemäßen Betätigungseinrichtung gering. Zusätzliche und separate Befestigungsmittel sind nicht vorgesehen und nicht vonnöten. Insbesondere im Zusammenspiel mit der beidseitigen Abstützung des wenigstens einen Bolzenelements kann das Vermittlungselement fest und sicher befestigt werden.

Bei einer weiteren Ausführungsform der Erfindung ist wenigstens eines der Bolzenelemente mittels des Vermittlungselements am Verbindungselement gehalten. Das Vermittlungselement übernimmt somit nicht nur die Funktion der Abstützung und damit der Toleranz- bzw. Spielkompensation, sondern auch die Funktion der Befestigung des Bolzenelements am Verbindungselement. Durch diese Funktionsintegration können die Teileanzahl, die Kosten sowie das Gewicht der erfindungsgemäßen Betätigungseinrichtung in einem besonders geringen Rahmen gehalten werden.

Zum Befestigen des Vermittlungselements an dem einen Bolzenelement und/oder zum Halten des wenigstens einen Bolzenelements am Verbindungselement ist vorzugsweise vorgesehen, dass das Vermittlungselement mit dem einen Bolzenelement verrastet ist. Dadurch ist eine einfache, zeit- und kostengünstige Montage ermöglicht.

Eine vorteilhafte Kompensation auch von relativ großen Toleranzen und Spielen ist insbesondere dann ermöglicht, wenn das Vermittlungselement wenigstens einen Vorsprung aufweist, der gegenüber wenigstens einem sich an den Vorsprung anschließenden Teilbereich des Vermittlungselements erhaben ist und über welchen das Vermittlungselement an wenigstens einem der Bolzenelemente oder am Verbindungselement, insbesondere federnd, abgestützt ist. Mittels des Vorsprungs ist es insbesondere möglich, das Vermittlungselement mit dem wenigstens einen Bolzenelement zu verklemmen bzw. vorzuspannen. Somit können Relativbewegungen und daraus resultierende Geräusche auch bei einer hohen Lebens- und Betriebsdauer mit großen Temperaturschwankungen sicher vermieden werden.

Vorteilhafterweise ist der Vorsprung mittels einer Beschichtung, insbesondere einer Schutzbeschichtung, des Vermittlungselements gebildet. Dadurch kann das Vermittlungselement kostengünstig hergestellt werden. Ferner kann vorgesehen sein, dass der Vorsprung mittels wenigstens einer Faser und/oder dergleichen Materialanhäufung gebildet ist.

Zur sicheren Spiel- und Toleranzkompensation, auch bei großen Temperaturschwankungen, ist vorteilhafterweise vorgesehen, dass das Vermittlungselement federnd an den Bolzenelementen abgestützt ist.

Bei einer weiteren vorteilhaften Ausführungsform der Erfindung weist das Vermittlungselement den Bolzenelementen jeweils zugeordnete Durchgangsöffnungen auf, welche von den zugehörigen Bolzenelementen in einer jeweiligen Durchgangsrichtung durchdrungen sind. Das Vermittlungselement kann somit auf einfache Weise montiert werden, indem die Bolzenelemente beispielsweise in der Durchgangsrichtung durch die jeweiligen Durchgangsöffnungen hindurchgesteckt werden.

In weiterer Ausgestaltung ist vorgesehen, dass wenigstens eine der Durchgangsöffnungen in Umfangsrichtung eine Öffnung aufweist, über welche das zugehörige Bolzenelement schräg, insbesondere senkrecht, zur Durchgangsrichtung in die Durchgangsöffnung einsteckbar ist. Dies ist einer besonders einfachen, zeit- und kostengünstigen Montage zuträglich, was die Kosten der Betätigungseinrichtung und damit der gesamten Turbine besonders gering hält.

Das Vermittlungselement kann aus einem metallischen Werkstoff gebildet sein. Dadurch weist es vorteilhafte, insbesondere federnde, Eigenschaften auf und kann auch große Temperaturschwankungen zumindest im Wesentlichen schadfrei ertragen. Dabei ist das Vermittlungselement beispielsweise als Blechstreifen ausgebildet.

Das Vermittlungselement kann auch aus einem Kunststoff gebildet sein. Dies führt zu einem besonders geringen Gewicht des Vermittlungselements und damit der Betätigungseinrichtung.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Perspektivansicht einer Betätigungseinrichtung für eine Turbine eines Abgasturboladers, über welche ein Umgehungsventil für einen Umgehungskanal der Turbine verstellbar ist und welche ein besonders vorteilhaftes Geräuschverhalten aufweist;
- Fig. 2: eine schematische Draufsicht der Betätigungseinrichtung gemäß Fig. 1;
- Fig. 3: eine schematische Seitenansicht der Betätigungseinrichtung gemäß den Fig. 1 und 2;
- Fig. 4: eine schematische Perspektivansicht eines Vermittlungselements der Betätigungseinrichtung gemäß den Fig. 1 bis 3;
- Fig. 5: eine schematische Perspektivansicht einer weiteren Ausführungsform des Vermittlungselements gemäß Fig. 4; und
- Fig. 6: eine schematische Perspektivansicht einer weiteren Ausführungsform des Vermittlungselements gemäß den Fig. 4 und 5.

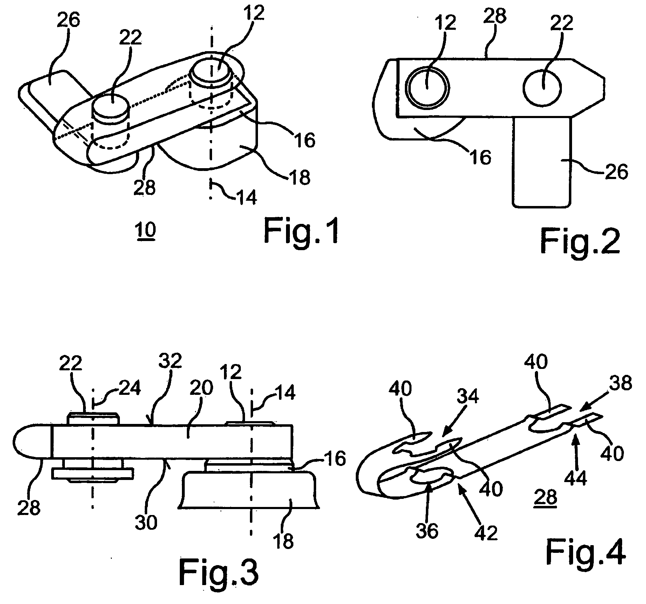

Die Fig. 1 bis 3 zeigen eine Betätigungseinrichtung 10 für eine Turbine eines Abgasturboladers. Der Abgasturbolader dient beispielsweise zum Aufladen einer Verbrennungskraftmaschine eines Kraftwagens. Der Abgasturbolader umfasst einen Verdichter mit einem Verdichterrad, mittels welchem der Verbrennungskraftmaschine zuzuführende Luft zu verdichten ist. Der Verdichter ist dabei über die Turbine des Abgasturboladers antreibbar.

Dazu umfasst die Turbine ein Turbinengehäuse mit einem Aufnahmeraum, in welchem ein Turbinenrad der Turbine um eine Turbinenraddrehachse relativ zu dem Turbinengehäuse drehbar zumindest bereichsweise aufgenommen ist.

Das Turbinengehäuse weist ferner wenigstens einen Zuführkanal auf, über welchen dem Turbinenrad Abgas der Verbrennungskraftmaschine zuführbar ist. Das Abgas kann das Turbinenrad anströmen und dadurch antreiben. Das Turbinenrad ist drehfest mit einer Welle des Abgasturboladers verbunden, mit welcher auch das Verdichterrad drehfest verbunden ist. Dadurch kann das Verdichterrad von dem Turbinenrad angetrieben werden.

Zur Steuerung bzw. Regelung des vom Verdichter bereitstellbaren Ladedrucks des Abgasturboladers weist die Turbine wenigstens einen Umgehungskanal auf. Mittels des Umgehungskanals ist Abgas von stromauf des Turbinenrads abzweigbar und um das Turbinenrad führbar. Mit anderen Worten kann das den Umgehungskanal umströmende Abgas das Turbinenrad umgehen ohne das Turbinenrad zu beaufschlagen und dadurch anzutreiben.

Zum Einstellen der den Umgehungskanal durchströmenden Menge bzw. Masse des Abgases ist ein Ventilelement, ein sogenanntes Waste-Gate-Ventil, vorgesehen, welches zwischen einer Schließstellung und wenigstens einer Offenstellung verstellbar ist. In der Schließstellung ist der Umgehungskanal fluidisch versperrt, so dass kein Abgas in den Umgehungskanal einströmen und das Turbinenrad umgehen kann.

In der wenigstens einen Offenstellung ist der Umgehungskanal zumindest teilweise fluidisch freigegeben, so dass Abgas in den Umgehungskanal einströmen und das Turbinenrad umgehen kann.

Das Ventilelement ist dabei über die Betätigungseinrichtung 10 verstellbar. Die Betätigungseinrichtung 10 umfasst einen Hebelarmbolzen 12, der das Turbinengehäuse durchdringt und mit dem Ventilelement drehfest verbunden ist. Dabei ist der Hebelarmbolzen 12 um eine Hebelarmbolzendrehachse 14 relativ zu dem Turbinengehäuse drehbar. Zur Darstellung einer hohen Funktionserfüllungssicherheit ist eine Lagerhülse 16 vorgesehen, über welche der Hebelarmbolzen 12 am Turbinengehäuse drehbar gelagert ist. Darüber hinaus ist ein Gehäuse 18 vorgesehen, in welchem der Hebelarmbolzen 12 gelagert ist und welches beispielsweise ein Austreten von Medien wie beispielsweise Abgas, Öl oder dergleichen aus dem Turbinengehäuse heraus vermeidet.

Die Betätigungseinrichtung 10 umfasst ferner eine Verbindungsplatte 20 mit einer ersten Durchtrittsöffnung, welche von dem Hebelarmbolzen 12 durchdrungen ist. Mit anderen Worten ist der Hebelarmbolzen 12 in der ersten Durchtrittsöffnung der Verbindungsplatte 20 aufgenommen. Die Verbindungsplatte 20 ist dabei drehfest mit dem Hebelarmbolzen 12 verbunden.

Die Betätigungseinrichtung 10 umfasst auch einen Verbindungsbolzen 22, welcher eine zweite Durchtrittsöffnung der Verbindungsplatte 20 durchdringt. Mit anderen Worten ist der Verbindungsbolzen 22 in der zweiten Durchtrittsöffnung der Verbindungsplatte 20 aufgenommen. Der Verbindungsbolzen 22 ist dabei gelenkig mit der Verbindungsplatte 20 verbunden. Dies bedeutet, dass der Verbindungsbolzen 22 mit der Verbindungsplatte 20 um eine Verbindungsbolzendrehachse 24 relativ zur Verbindungsplatte 20 drehbar verbunden ist.

Wie insbesondere der Fig. 3 zu entnehmen ist, verlaufen dabei die Hebelarmbolzendrehachse 14 und die Verbindungsbolzendrehachse 24 zumindest im Wesentlichen parallel zueinander.

Der Verbindungsbolzen 22 ist mit einer Betätigungsplatte 26 drehfest verbunden. Dazu umfasst die Betätigungsplatte 26 eine dritte Durchtrittsöffnung, in welcher der Verbindungsbolzen 22 aufgenommen ist.

Alternativ kann vorgesehen sein, dass der Verbindungsbolzen 22 drehfest mit der Verbindungsplatte 20 und mit der Betätigungsplatte 26 um die Verbindungsbolzendrehachse 24 relativ zur Betätigungsplatte 26 drehbar verbunden ist.

Die Betätigungsplatte 26 ist zumindest im Wesentlichen senkrecht zu der Hebelarmbolzendrehachse 14 und der Verbindungsbolzendrehachse 24 translatorisch bewegbar und über den Verbindungsbolzen 22 gelenkig mit der Verbindungsplatte 20 verbunden. Zum translatorischen Bewegen bzw. Verschieben der Betätigungsplatte 26 ist diese zumindest mittelbar mit einer Druckdose des Abgasturboladers verbunden.

Befindet sich das Ventilelement beispielsweise in seiner Schließstellung, in welcher das zumindest im Wesentlichen gesamte Abgas das Turbinenrad anströmt und antreibt, und übersteigt der Ladedruck des Abgasturboladers einen vorgebbaren Schwellenwert, so wird dadurch eine Bewegung einer Membran der Druckdose bewirkt. Die Bewegung der Membran wird zumindest mittelbar auf die Betätigungsplatte 26 übertragen, wodurch die Betätigungsplatte 26 translatorisch bewegt wird. Infolge der geschilderten Kopplung der Betätigungsplatte 26 mit dem Hebelarmbolzen 12 sowie infolge der Kopplung des Hebelarmbolzens 12 mit dem Ventilelement wird die translatorische Bewegung der Betätigungsplatte 26 in eine rotatorische Bewegung des Hebelarmbolzens 12 um die Hebelarmbolzendrehachse 14 und weiter in eine Schwenkbewegung des Ventilelements aus seiner Schließstellung in seine Offenstellung umgewandelt.

Um nun unerwünschte Relativbewegungen der Verbindungsplatte 20 relativ zu dem Hebelarmbolzen 12 und relativ zu dem Verbindungsbolzen 22 zu vermeiden, ist ein in der Fig. 4 gezeigtes Vermittlungselement 28 vorgesehen. Das Vermittlungselement ist einstückig ausgebildet und in Richtung der Hebelarmbolzendrehachse 14 bzw. der Verbindungsbolzendrehachse 24 zwischen der Verbindungsplatte 20 und dem Hebelarmbolzen 12 und zwischen der Verbindungsplatte 20 und dem Verbindungsbolzen 22 angeordnet. Mit anderen Worten ist sowohl der Hebelarmbolzen 12 als auch der Verbindungsbolzen 22 unter Vermittlung des das einstückigen Vermittlungselements 28 an der Verbindungsplatte 20 abgestützt. Dadurch können fertigungsbedingte und/oder verschleißbedingte Toleranzen bzw. Spiele zwischen der Verbindungsplatte 20 und dem Hebelarmbolzen 12 bzw. dem Verbindungsbolzen 22 kompensiert werden, so dass Relativbewegungen zwischen der Verbindungsplatte 20 und dem Hebelarmbolzen 12 bzw. dem Verbindungsbolzen 22 und daraus resultierende Geräusche vermieden oder gering gehalten werden können.

Wie insbesondere der Fig. 3 zu entnehmen ist, ist das Vermittlungselement 28 auf einer ersten Seite 30 der Verbindungsplatte 20 zwischen dem Hebelarmbolzen 12 und der Verbindungsplatte 20 und zwischen dem Verbindungsbolzen 22 und der Verbindungsplatte 20 angeordnet. Darüber hinaus ist das Vermittlungselement 28 auch auf einer der ersten Seite 30 abgewandten, zweiten Seite 32 der Verbindungsplatte 20 zwischen der Verbindungsplatte 20 und dem Verbindungsbolzen 22 angeordnet. Dadurch ist eine besonders feste und vorteilhafte Verbindung des Verbindungsbolzens 22 mit der Verbindungsplatte 20 realisiert. Mit anderen Worten ist die Verbindungsplatte 20 mittels des Vermittlungselements 28 am Verbindungsbolzen 22 gesichert bzw. umgekehrt.

Die Einstückigkeit des Vermittlungselements 28 ermöglicht eine zeit- und kostengünstige Montage. Ferner ist an allen Verbindungsstellen der Betätigungseinrichtung 10, welche spielbehaftet sein können, mittels des lediglich einen, einstückigen Vermittlungselements 28 eine Spiel- und Toleranzkompensation bewirkt. So kann auch der Verschleiß der Betätigungseinrichtung 10 gering gehalten werden. Das Vermittlungselement 28 ermöglicht es auch auf vorteilhafte Weise, bei Anregung der Betätigungseinrichtung 10 die Geräuschentwicklungen zu vermeiden oder gering zu halten.

Wie insbesondere der Fig. 4 zu entnehmen ist, weist das Vermittlungselement 28 eine erste Durchgangsöffnung 34 auf, in welcher der Verbindungsbolzen 22 auf der zweiten Seite 32 aufgenommen ist. Ausgehend von der ersten Durchgangsöffnung 34 ist das vorliegend als Blechstreifen ausgebildete Vermittlungselement 28 um die Verbindungsplatte 20 herum auf die erste Seite 30 geführt, auf welcher das Vermittlungselement 28 eine zweite Durchgangsöffnung 36 zur Aufnahme des Verbindungsbolzens 22 auf der ersten Seite 30 aufweist.

Das Vermittlungselement 28 weist ferner eine dritte Durchgangsöffnung 38 auf, in welcher der Hebelarmbolzen 12 auf der ersten Seite 30 aufgenommen ist.

Die Durchgangsöffnungen 34, 36, 38 weisen jeweils eine Durchgangsrichtung auf, in welcher sie von dem Verbindungsbolzen 22 bzw. von dem Hebelarmbolzen 12 durchdrungen sind. Während die zweite Durchgangsöffnung 36 in Umfangsrichtung vollständig umlaufend geschlossen ist, weisen die Durchgangsöffnungen 34, 38 in Umfangsrichtung eine jeweilige Öffnung auf. Über die Öffnung der dritten Durchgangsöffnung 38 ist es beispielsweise möglich, den Hebelarmbolzen 12 in die dritte Durchgangsöffnung 38 senkrecht zu ihrer Durchgangsrichtung einzustecken. Mit anderen Worten ist es möglich, das Vermittlungselement 28 senkrecht zur Durchgangsrichtung der dritten Durchgangsöffnung 38 auf den Hebelarmbolzen 12 aufzustecken.

Analoges kann für die erste Durchgangsöffnung 34 gelten, in welche der Verbindungsbolzen 22 senkrecht zur Durchgangsrichtung der ersten Durchgangsöffnung 34 in diese eingesteckt werden kann. Umgekehrt bedeutet dies, dass das Vermittlungselement 28 senkrecht zur Durchgangsrichtung der ersten Durchgangsöffnung 34 auf den Verbindungsbolzen 22 aufgesteckt werden kann.

Die in Umfangsrichtung offenen Durchgangsöffnungen 34, 38 sind durch jeweilige Arme 40 des Vermittlungselements 28 begrenzt, welche den Verbindungsbolzen bzw. den Hebelarmbolzen 12 insbesondere federnd umgreifen können. Dadurch ist das Vermittlungselement 28 sicher sowohl am Verbindungsbolzen 22 als auch am Hebelarmbolzen 12 fixiert.

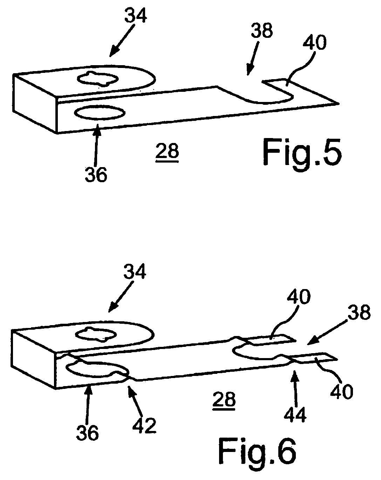

Bei den Vermittlungselementen 28 gemäß den Fig. 5 und 6 ist auch die erste Durchgangsöffnung 34 in Umfangsrichtung vollständig geschlossen, so dass der Verbindungsbolzen 22 in die Durchgangsöffnung 34, 36 jeweils in Durchgangsrichtung einzustecken ist.

Das Vermittlungselement 28 weist auch erste Vorsprünge 42 und zweite Vorsprünge 44 auf. Die Vorsprünge 42, 44 sind dabei gegenüber sich an die Vorsprünge 42, 44 anschließende Teilbereiche des relativ dünnwandigen Vermittlungselements 28 erhaben. Die ersten Vorsprünge 42 sind dem Verbindungsbolzen 22 zugeordnet, während die zweiten Vorsprünge 44 dem Hebelarmbolzen 12 zugeordnet sind. Über die ersten Vorsprünge 42 ist das Vermittlungselement 28 auf der ersten Seite 30 an der Verbindungsplatte 20 abgestützt. Entsprechend dazu ist das Vermittlungselement 28 über die zweiten Vorsprünge 44 auf der ersten Seite 30 an der Verbindungsplatte 20 abgestützt. Da das Vermittlungselement 28 auch an dem Verbindungsbolzen 22 und an dem Hebelarmbolzen 12 abgestützt ist, kann das Vermittlungselement 28 mittels den Vorsprüngen 42, 44 besonders fest zwischen die Verbindungsplatte 20 und den Hebelarmbolzen 12 bzw. den Verbindungsbolzen 22 geklemmt werden, so dass die Verbindungsplatte 20 fest und vorteilhaft mit dem Hebelarmbolzen 12 und dem Verbindungsbolzen 22 vorgespannt ist. Dadurch können die Spiele und/oder die Toleranzen effizient und effektiv kompensiert werden.

Alternativ oder zusätzlich ist es auch möglich, dass das Vermittlungselement 28 über wenigstens einen entsprechenden Vorsprung am Verbindungsbolzen 22 und/oder über wenigstens einen entsprechenden Vorsprung am Hebelarmbolzen 12 abgestützt ist.

Die Vorsprünge 42, 44 sind beispielsweise durch Einprägungen oder dergleichen des Blechstreifens gebildet. Die Vorsprünge 42, 44 können jedoch auch durch eine Materialanhäufung gebildet sein, beispielsweise mittels einer Beschichtung, wenigstens einer Faser oder dergleichen Materialanhäufung des Vermittlungselements 28.

Die Fig. 5 und 6 zeigen weitere Ausführungsformen des Vermittlungselements 28, welche an vorgegebene bzw. vorgebbare Montagebedingungen angepasst sind.

## Patentansprüche

1. Betätigungseinrichtung (10) für eine Turbine eines Abgasturboladers, insbesondere zum Einstellen des Ladedrucks des Abgasturboladers, mit einem um eine Drehachse (14) drehbaren, ersten Bolzenelement (12), über welches ein Ventilelement der Turbine zwischen einer Schließstellung und wenigstens einer Offenstellung bewegbar ist und welches drehfest mit einem Verbindungselement (20) verbunden ist, das über ein zweites Bolzenelement (22) gelenkig mit einem in einer zumindest im Wesentlichen senkrecht zur Drehachse translatorisch bewegbaren Betätigungselement (26) gekoppelt ist, mittels welchem durch translatorisches Bewegen des Betätigungselements (26) das erste Bolzenelement (12) um die Drehachse (14) drehbar ist,
**dadurch gekennzeichnet, dass**
beide Bolzenelemente (12, 22) auf wenigstens einer ersten Seite (30) des Verbindungselements (20) über ein einstückiges Vermittlungselement (28) an dem Verbindungselement (20) abgestützt sind, wobei wenigstens eines der Bolzenelemente (12, 22), insbesondere das zweite Bolzenelement (22), auch auf einer der ersten Seite (30) abgewandten zweiten Seite (32) des Verbindungselements (20) über das einstückige Vermittlungselement (28) am Verbindungselement (20) abgestützt ist.

2. Betätigungseinrichtung (10) nach Anspruch 1,
**dadurch gekennzeichnet, dass**
das einstückige Vermittlungselement (28) an einem der Bolzenelemente (12, 22), insbesondere am zweiten Bolzenelement (22), befestigt ist.

3. Betätigungseinrichtung (10) nach einem der vorhergehenden Ansprüche,
**dadurch gekennzeichnet, dass**
wenigstens eines der Bolzenelemente (12, 22) mittels des Vermittlungselements (28) am Verbindungselement (20) gehalten ist.

4. Betätigungseinrichtung (10) nach einem der vorhergehenden Ansprüche,
**dadurch gekennzeichnet, dass**
das Vermittlungselement (28) wenigstens einen Vorsprung (42, 44) aufweist, welcher gegenüber wenigstens einem sich an den Vorsprung (42, 44) anschließenden Teilbereich des Vermittlungselements (28) erhaben ist und über welchen das Vermittlungselement (28) an wenigstens einem der Bolzenelemente (12, 22) oder an dem Verbindungselement (20), insbesondere federnd, abgestützt ist.

5. Betätigungseinrichtung (10) nach Anspruch 4,
**dadurch gekennzeichnet, dass**
der Vorsprung (42, 44) mittels einer Beschichtung des Vermittlungselements (28) gebildet ist.

6. Betätigungseinrichtung (10) nach einem der vorhergehenden Ansprüche,
**dadurch gekennzeichnet, dass**
das Vermittlungselement (28) federnd an den Bolzenelementen (12, 22) und/oder am Verbindungselement (20) abgestützt ist.

7. Betätigungseinrichtung (10) nach einem der vorhergehenden Ansprüche,
**dadurch gekennzeichnet, dass**
das Vermittlungselement (28) den Bolzenelementen (12, 22) jeweils zugeordnete Durchgangsöffnungen (36, 38, 40) aufweist, welche von dem zugehörigen Bolzenelement (12, 22) in einer jeweiligen Durchgangsrichtung durchdrungen sind.

8. Betätigungseinrichtung (10) nach Anspruch 7,
**dadurch gekennzeichnet, dass**
wenigstens eine der Durchgangsöffnungen (36, 38, 40) in Umfangsrichtung eine Öffnung aufweist, über welche das zugehörige Bolzenelement (12, 22) schräg, insbesondere senkrecht, zur Durchgangsrichtung in die Durchgangsöffnung (36, 38, 40) einsteckbar ist.

## Claims

1. An actuating device (10) for a turbine of an exhaust gas turbocharger, in particular for setting the charging pressure of the exhaust gas turbocharger, comprising a first bolt element (12) which is rotatable about an axis of rotation (14), via which a valve element of the turbine is movable between a closed position and at least one open position, and which is connected anti-rotationally with a connecting element (20) which is coupled in an articulated manner via a second bolt element (22) to an actuating element (26) which is translatorily movable at least essentially vertically to the axis of rotation, by means of which the first bolt element (12) is rotatable about the axis of rotation (14) through a translatory motion of the actuating element (26), **characterised in that**
the two bolt elements (12, 22) on at least a first side (30) of the connecting element (20) are supported via an integrally formed mediating element (28) on the connecting element (20), wherein at least one of the bolt elements (12, 22), in particular the second bolt element (22), is supported also on a second side (32) of the connecting element (20) facing away from the first side (30) via the integrally formed mediating element (28) on the connecting element (20).

2. The actuating device (10) according to Claim 1,
**characterised in that**
the integrally formed mediating element (28) is secured at one of the bolt elements (12, 22), in particular at the second bolt element (22).

3. The actuating device (10) according to one of the previous claims,
**characterised in that**
at least one of the bolt elements (12, 22) is held on the connecting element (20) via the mediating element (28).

4. The actuating device (10) according to one of the previous claims,
**characterised in that**
the mediating element (28) comprises at least one protrusion (42, 44) which is raised relative to at least one partial area of the mediating element (28), which adjoins the protrusion (42, 44) and via which the mediating element (28) is supported, in particular resiliently, on at least one of the bolt elements (12, 22) or the connecting element (20).

5. The actuating device (10) according to Claim 4,
**characterised in that**
the protrusion (42, 44) is formed by means of a coating of the mediating element (28).

6. The actuating device (10) according to one of the previous claims,
**characterised in that**
the mediating element (28) is resiliently supported in the bolt elements (12, 22) and/or on the connecting element (20).

7. The actuating device (10) according to one of the previous claims,
**characterised in that**
the mediating element (28) comprises through-holes (36, 38, 40) which are respectively assigned to the bolt elements (12, 22), and which are penetrated by the associated bolt element (12, 22) in a respective direction of passage.

8. The actuating device (10) according to Claim 7,
**characterised in that**
at least one of the through-holes (36, 38, 40) comprises an opening in the circumferential direction via which the associated bolt element (12, 22) may be inserted at an angle, in particular vertically, to the direction of passage into the through-hole (36, 38, 40).

## Revendications

1. Dispositif de commande (10) pour une turbine d'un turbocompresseur à gaz d'échappement, en particulier pour le réglage de la pression de suralimentation du turbocompresseur, comprenant un premier élément boulon (12) tournant autour d'un axe de rotation (14) au moyen duquel un élément soupape de la turbine peut être déplacé entre une position de fermeture et au moins une position d'ouverture et lequel est relié de manière solidaire en rotation à un élément de liaison (20) qui est couplé de manière articulée, par un second élément boulon (22), à un élément de commande (26) mobile en translation dans une direction au moins sensiblement perpendiculaire à l'axe de rotation, au moyen duquel le premier élément boulon (12) peut être entraîné en rotation autour de l'axe de rotation (14) par un mouvement de translation de l'élément de commande (26),
**caractérisé en ce que**
les deux éléments boulon (12, 22) sont soutenus sur l'élément de liaison (20), au moins d'un premier côté (30) dudit élément de liaison (20), par un élément intermédiaire (28) formé d'une seule pièce, au moins un des éléments boulon (12, 22), en particulier le second élément boulon (22), étant soutenu sur l'élément de liaison (20) aussi d'un second côté (32) opposé au premier côté (30) de l'élément de liaison (20) par l'élément intermédiaire (28) formé d'une seule pièce.

2. Dispositif de commande (10) selon la revendication 1,
**caractérisé en ce que**
l'élément intermédiaire (28) formé d'une seule pièce est fixé à un des éléments boulon (12, 22), en particulier au second élément boulon (22).

3. Dispositif de commande (10) selon l'une des revendications précédentes,
**caractérisé en ce que**
au moins un des éléments boulon (12, 22) est maintenu sur l'élément de liaison (20) au moyen de l'élément intermédiaire (28).

4. Dispositif de commande (10) selon l'une des revendications précédentes,
**caractérisé en ce que**
l'élément intermédiaire (28) présente au moins une saillie (42, 44), laquelle est en relief par rapport à au moins une zone partielle de l'élément intermédiaire (28) se raccordant à la saillie (42, 44) et par laquelle l'élément intermédiaire (28) est soutenu, en particulier de manière élastique, sur au moins un des éléments boulon (12, 22) ou sur l'élément de liaison (20).

5. Dispositif de commande (10) selon la revendication 4,
**caractérisé en ce que**
la saillie (42, 44) est formée au moyen d'un revêtement de l'élément intermédiaire (28).

6. Dispositif de commande (10) selon l'une des revendications précédentes,
**caractérisé en ce que**
l'élément intermédiaire (28) est soutenu de manière élastique sur les éléments boulon (12, 22) et/ou sur l'élément de liaison (20).

7. Dispositif de commande (10) selon l'une des revendications précédentes,
**caractérisé en ce que**
l'élément intermédiaire (28) présente des ouvertures de passage (36, 38, 40) associées aux éléments boulon (12, 22), lesquelles sont traversées dans une direction de passage respective par l'élément boulon (12, 22) associé.

8. Dispositif de commande (10) selon la revendication 7,
**caractérisé en ce que**
au moins une des ouvertures de passage (36, 38, 40) présente dans la direction périphérique une ouverture par laquelle l'élément boulon (12, 22) associé peut être introduit obliquement, en particulier perpendiculairement à la direction de passage dans l'ouverture de passage (36, 38, 40).
